# EUROPEAN PATENT APPLICATION

(11) **EP 4 512 286 A1**
(43) Date of publication of application: **26.02.2025**
(21) Application number: 22939411.9
(22) Date of filing: 29.04.2022
(51) Int. Cl.: A47J 37/06, A47J 27/12

(54) **COOKING APPLIANCE**

(30) Priority: 24.04.2022 CN 202220961942 U; 24.04.2022 CN 202210435962
(71) Applicant: Guangdong Midea Consumer Electrics Manufacturing Co. Ltd., Foshan, Guangdong 528311 (CN)
(72) Inventor: HUANG, Guojing, Foshan, Guangdong 528311 (CN); DU, Zujing, Foshan, Guangdong 528311 (CN); ZHANG, Mamei, Foshan, Guangdong 528311 (CN); XU, Zhibo, Foshan, Guangdong 528311 (CN); YAO, Liang, Foshan, Guangdong 528311 (CN); ZHANG, Xiaoquan, Foshan, Guangdong 528311 (CN); LI, Jiasheng, Foshan, Guangdong 528311 (CN)
(74) Representative: RGTH
(86) International application number: PCT/CN2022/090778
(87) International publication number: WO 2023/206567

(57) **Abstract**

Provided is a cooking appliance. The cooking appliance includes: a housing (100) having an inner cavity and an opening in communication with the inner cavity; and at least two partitions (200). One of the at least two partitions (200) is removably connected to the housing (100) and located in the inner cavity. The inner cavity is divided into the first inner cavity (110) and the second inner cavity (120) by at least one of the at least two partitions (200). A bottom of each of the at least two partitions (200) is at a different distance from a connection of the partition (200) with the housing (100). Therefore, when different partitions (200) are placed in the inner cavity, the inner cavity is divided by the partition (200) into the first inner cavity (110) and the second inner cavity (120) having different volumes. By providing the at least two partitions (200), cooking cavities having more volume options are formed in the inner cavity of the housing (100) to meet cooking requirements of ingredients of different volumes. In this way, a simple structure is provided for ease of use.

## Description

### CROSS-REFERENCE TO RELATED APPLICATION

This application claims priority to Chinese patent application Nos. 202220961942.6 and 202210435962.4, both filed on April 24, 2022 and both titled "COOKING APPLIANCE", the entire contents of which are incorporated herein by reference.

### FIELD

The present disclosure belongs to the field of culinary and heating device technologies, and more particularly, to a cooking appliance.

### BACKGROUND

Cooking appliances such as air fryers and ovens have cooking cavities for accommodating an ingredient for cooking. However, these cooking cavities each have a constant volume, failing to meet cooking requirements of ingredients of different volumes.

### SUMMARY

The present disclosure aims to solve at least to some extent the technical problem that a constant volume of a cooking appliance cannot meet cooking requirements of ingredients of different volumes. To this end, embodiments of the present disclosure provide a cooking appliance.

According to an embodiment of the present disclosure, a cooking appliance is provided. The cooking appliance comprises: a housing having an inner cavity and an opening in communication with the inner cavity; and a partition removably disposed in the housing and located in the inner cavity. The inner cavity is divided into a first inner cavity and a second inner cavity by the partition.

In some embodiments, the cooking appliance comprises at least two partitions. One of the at least two partitions is removably connected to the housing and located in the inner cavity, and the inner cavity is divided into the first inner cavity and the second inner cavity by the at least one of the at least two partitions. A bottom of each of the at least two partitions is at a different distance from a connection of the partition with the housing.

In some embodiments, the partition comprises a bucket-like body or a plate-like body.

In some embodiments, the cooking appliance further comprises a cover assembly connected to the partition and/or movably connected to the housing, and the cover assembly is configured to cover the opening.

In some embodiments, the cover assembly comprises at least one first cover. One of the at least two partitions is removably disposed at the at least one first cover, and the at least one first cover is configured to partially or completely cover the opening.

In some embodiments, the number of the at least one first cover corresponds to the number of the partitions, and each of the at least two partitions is separately disposed at the at least one first cover.

When the least one first cover is configured to partially cover the opening, the cover assembly further comprises a second cover configured to cover a part of the opening that is uncovered by the first cover.

In some embodiments, the partition is thermally conductive.

In some embodiments, the partition has a hollow structure, and the hollow structure internally has a heat insulation portion.

In some embodiments, the cooking appliance further comprises a heating assembly. The heating assembly comprises: a first heating portion disposed in the housing or the first inner cavity to heat the first inner cavity; and a second heating portion disposed in the housing or the second inner cavity to heat the second inner cavity.

In some embodiments, the heating assembly comprises a movable heating portion movably disposed in the first inner cavity and/or the second inner cavity.

In some embodiments, movement positions of the movable heating portion in the first inner cavity and/or the second inner cavity comprise at least a position where the movable heating portion is located proximate to the partition and a position where the movable heating portion is located proximate to an inner wall of the housing.

In some embodiments, the inner wall of the housing is provided with a mounting fitting. The mounting fitting and the inner wall of the housing are integrally formed, and the mounting fitting is sealingly connected to the partition.

In some embodiments, an outer side wall of the bucket-like body is provided with a flange. The flange extends towards an outer side of the bucket-like body. The mounting fitting comprises a groove for accommodating the flange or a rib for carrying the flange.

In some embodiments, the mounting fitting further comprises a catch block disposed above the rib, and an edge of the opening is tightly pressed against the rib by the catch block.

In some embodiments, the rib has a sealing groove, and a sealing gasket is disposed in the sealing groove.

In some embodiments, at least two grooves or at least two ribs are respectively provided and arranged at different positions on the inner wall.

In some embodiments, the mounting fitting is a protruding platform configured to be tightly attached to an outer side wall of the bucket-like body or a bottom wall of the bucket-like body.

Embodiments of the present disclosure may at least provide the following advantageous effects.

In the above cooking appliance, the at least two partitions are provided. One of the at least two partitions is removably disposed at the housing. When at least one of the two partitions is disposed in the inner cavity, the inner cavity is divided into the first inner cavity and the second inner cavity by the partition. In addition, since the bottom of each of the at least two partitions is at the different distance from the connection of the partition with the housing, when different partitions are placed in the inner cavity, the inner cavity is divided by the partition into the first inner cavity and the second inner cavity having different volumes. That is, in the cooking appliance of the present disclosure, by providing the at least two partitions, the inner cavity of the housing may have cooking cavities of more volume options, to meet cooking requirements of ingredients of different volumes. In this way, a simple structure is provided for ease of use.

In some embodiments, the cooking appliance further comprises a heating assembly, and the heating assembly at least comprises a movable heating portion movably disposed in the first inner cavity and/or in the second inner cavity.

In some embodiments, the cooking appliance further comprises a door assembly disposed at the housing to expose or cover both openings corresponding to the first inner cavity and the second inner cavity at the same time.

In some embodiments, a sealing strip is disposed between the door assembly and the partition to completely isolate the first inner cavity from the second inner cavity.

In some embodiments, the sealing strip is disposed at the door assembly and/or at the partition.

In some embodiments, the door assembly comprises: a door frame having a side hinged to the housing; a viewable door body fixedly disposed at the door frame; a door handle disposed at a side of the door frame opposite to the side of the door frame hinged to the housing; and a locking structure disposed at the side of the door frame opposite to the side of the door frame hinged to the housing.

In some embodiments, the partition is thermally conductive.

In some embodiments, the heating assembly further comprises: a first heating portion disposed in the housing or the first inner cavity to heat the first inner cavity; and a second heating portion disposed in the housing or the second inner cavity to heat the second inner cavity.

In some embodiments, the partition has a hollow structure, and the hollow structure internally has a heat insulation portion.

In some embodiments, movement positions of the movable heating portion in the first inner cavity and/or the second inner cavity comprise at least a position where the movable heating portion is located proximate to the partition and a position where the movable heating portion is located proximate to an inner wall of the housing.

In some embodiments, the inner wall of the housing is provided with a mounting fitting. The mounting fitting and the inner wall of the housing is integrally formed, and the mounting fitting is sealingly connected to the partition.

In some embodiments, the mounting fitting is a groove when the inner cavity is vertically divided by the partition into the first inner cavity and the second inner cavity that are arranged in parallel; or the mounting fitting is a groove or a rib when the inner cavity is horizontally divided by the partition into the first inner cavity and the second inner cavity that are stacked together.

In some embodiments, at least two mounting fittings are provided in a vertical direction or in a horizontal direction.

In some embodiments, the cooking appliance further comprises at least one inner tub, and each of the at least one inner tub is removably disposed in the inner cavity, in the first inner cavity, or in the second inner cavity.

When the inner tub is located in the inner cavity, in the first inner cavity, or in the second inner cavity, a side wall of the inner tub covers the opening or a part of the opening corresponding to the first inner cavity or a part of the opening corresponding to the second inner cavity.

In some embodiments, the cooking appliance further comprises a cover assembly when the side wall of the inner tub covers only the part of the opening corresponding to the first inner cavity. The cover assembly is movably connected to the housing to allow the cover assembly to expose or cover the part of the opening corresponding to the second inner cavity.

The embodiments of the present disclosure may at least provide the following advantageous effects.

In the above cooking appliance, the partition is removably disposed in the housing. When the partition is placed in the inner cavity, the inner cavity is divided into the first inner cavity and the second inner cavity by the partition. Therefore, two cooking cavities of small volumes are formed in the cooking appliance to cook ingredients of small volumes. When the partition is removed from the inner cavity, the whole inner cavity is used as a cooking cavity in the cooking appliance and can cook an ingredient of a large volume. In the present disclosure, by removably disposing the partition, a volume of the cooking cavity for accommodating the ingredient in the cooking appliance can be adjusted to meet the cooking requirements of the ingredients of different volumes.

Further, the heating assembly of the cooking appliance comprises at least a movable heating portion movably disposed in the first inner cavity and/or the second inner cavity. By moving the movable heating portion, a heating distance and a heating range of the movable heating portion for the ingredient can be adjusted to meet different heating requirements of the ingredient. Also, by moving the movable heating portion to avoid the ingredient, the whole inner cavity can be used as the cooking cavity to meet cooking requirements of a larger ingredient.

### BRIEF DESCRIPTION OF THE DRAWINGS

In order to describe the technical solutions in the embodiments of the present disclosure more clearly, the drawings to be used in the description of the embodiments will be briefly introduced below. The drawings in the following description are only some embodiments of the present disclosure, and other drawings may be obtained by those of ordinary skill in the art based on these drawings without any inventive efforts.
FIG. 1 is a schematic perspective view showing a structure of a cooking appliance according to a first embodiment of the present disclosure.
FIG. 2 is a schematic perspective view showing a structure of the cooking appliance in FIG. 1 with a second cover detached and a partition removed.
FIG. 3 is a schematic longitudinal sectional view of the cooking appliance in FIG. 1 in a first state.
FIG. 4 is a schematic structural view of a first partition in the cooking appliance in FIG. 3.
FIG. 5 is a schematic longitudinal sectional view of the cooking appliance in FIG. 1 in a second state.
FIG. 6 is a schematic structural view of a second partition in the cooking appliance in FIG. 5.
FIG. 7 is a schematic longitudinal sectional view of a cooking appliance according to a second embodiment in a first state.
FIG. 8 is an enlarged view of part A in FIG. 7.
FIG. 9 is a schematic longitudinal sectional view of a cooking appliance according to a second embodiment in a second state.
FIG. 10 is a schematic longitudinal sectional view of a cooking appliance according to a second embodiment in a third state.
FIG. 11 is a schematic perspective view showing a structure of a cooking appliance according to a first embodiment of the present disclosure.
FIG. 12 is a schematic perspective view showing a structure of the cooking appliance in FIG. 11 with a door assembly detached and an inner tub removed.
FIG. 13 is a schematic perspective view showing a structure of the cooking appliance in FIG. 12 with a partition removed.
FIG. 14 is a schematic longitudinal sectional view of the cooking appliance in FIG. 11.
FIG. 15 is a schematic perspective view showing a structure of a cooking appliance according to a second embodiment of the present disclosure.
FIG. 16 is a schematic longitudinal sectional view of the cooking appliance in FIG. 15 in a first state.
FIG. 17 is a schematic structural view of a configuration of an inner tub in the cooking appliance in FIG. 16.
FIG. 18 is a schematic longitudinal sectional view of the cooking appliance in FIG. 15 in a second state.
FIG. 19 is a schematic structural view of a configuration of another inner tub in the cooking appliance in FIG. 18.

### Reference numerals:

100 housing; 110 first inner cavity; 120 second inner cavity; 130 inner wall of housing; 200 partition; 210 first partition; 220 second partition; 230 third partition; 240 fourth partition; 250 fifth partition; 300 heating assembly; 310 first heating portion; 311 first fan; 312 first heat generating element; 320 second heating portion; 321 second fan; 322 second heat generating element; 330 movable heating portion; 400 mounting fitting; 421 rib; 422 catch block; 423 sealing gasket; 500 cover assembly; 510 first cover; 511 first cover body; 512 first cover handle; 520 second cover; 521 second cover body; 522 second cover handle; 5000 door assembly; 5100 door frame; 5200 viewable door body; 5300 door handle; 600 sealing strip; 700 inner tub; 710 side wall; 720 inner tub handle; 800 cover assembly; 810 cover body; 820 cover handle; 900 bakeware; 5000 door assembly; 5100 door frame; 5200 viewable door body; 5300 door handle; 600 sealing strip; 700 inner tub; 710 side wall; 720 inner tub handle; 800 cover assembly; 810 cover body; 820 cover handle; 900 bakeware.

### DETAILED DESCRIPTION OF THE EMBODIMENTS

Technical solutions according to embodiments of the present disclosure will be described clearly and completely below in combination with accompanying drawings of the embodiments of the present disclosure. The embodiments described below are only a part of the embodiments of the present disclosure, rather than all embodiments of the present disclosure. On a basis of the embodiments of the present disclosure, all other embodiments obtained by those of ordinary skill in the art without creative labor shall fall within the scope of the present disclosure.

Further, the same reference numerals and/or reference letters may appear in different examples of the present disclosure for the purpose of simplicity and clarity, instead of indicating a relationship between different embodiments and/or the discussed arrangements. In addition, the present disclosure provides examples of various specific processes and materials. However, applications of other processes and/or the use of other materials are conceivable for those of ordinary skill in the art.

Embodiments of the present disclosure will be described below in combination with the accompanying drawings and with reference to exemplary embodiments.

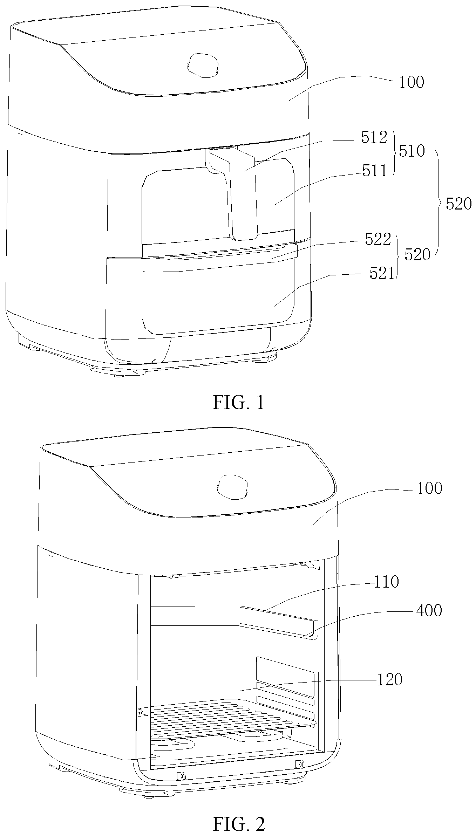

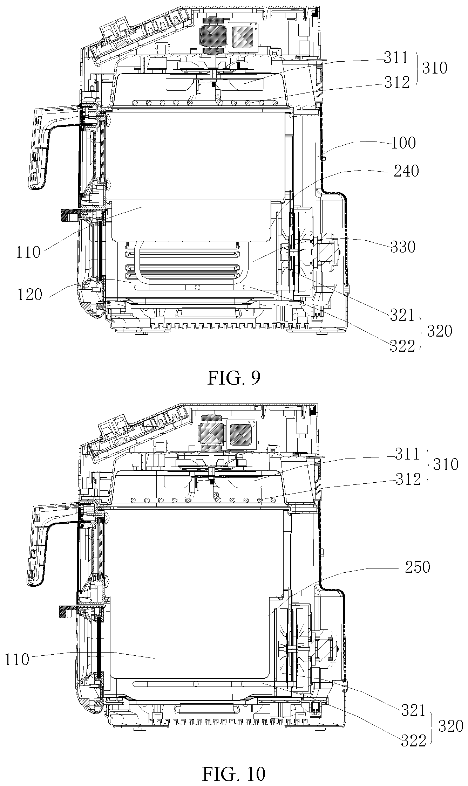

A cooking appliance is provided according to embodiments of the present disclosure. As illustrated in FIG. 1 to FIG. 10, and FIG. 12, the cooking appliance according to the embodiments of the present disclosure comprises a housing 100 having an inner cavity and an opening in communication with the inner cavity, and at least two partitions 200. One of the at least two partitions 200 is removably connected to the housing 100 and located in the inner cavity, and the inner cavity is divided into the first inner cavity 110 and the second inner cavity 120 by at least one of the at least two partitions 200. A bottom of each of the at least two partitions 200 is at a different distance from a connection of the partition 200 with the housing 100.

In the above cooking appliance, one of the at least two partitions 200 is removably disposed at the housing 100, and when at least one of the at least two partitions 200 is disposed in the inner cavity, the inner cavity is divided into the first inner cavity 110 and the second inner cavity 120 by the partition 200. In addition, since the bottom of each of the at least two partitions 200 is at the different distance from the connection of the partition 200 with the housing 100, when different partitions 200 are placed in the inner cavity, the inner cavity is divided by the partitions 200 into the first inner cavity 110 and the second inner cavity 120 having different volumes. That is, in the cooking appliance according to the embodiments of the present disclosure, by providing the at least two partitions 200, the inner cavity of the housing 100 may have cooking cavities of more volume options, to meet cooking requirements of ingredients of different volumes. In this way, a simple structure is provided for ease of use.

In the present disclosure, the housing 100 of the cooking appliance may comprise an inner wall and a shell surrounding the inner wall. There is a predetermined gap between the inner wall and the shell for arrangements of some conventional components of the cooking appliance, such as a control component, a detection component. Corresponding arrangement may be made as desired by those skilled in the art, and thus details thereof will be omitted here.

In the following embodiments of the present disclosure, the partition 200 is horizontally placed into the housing 100 to divide the inner cavity. Therefore, the partition 200 and portions above the partition 200 are formed as the first inner cavity 110, and portions below the partition 200 are formed as the second inner cavity 120. In this way, the inner cavity is divided into the first inner cavity 110 and the second inner cavity 120 that are stacked in an up-down direction.

In other embodiments, the partition 200 may also be vertically placed into the housing 100 to divide the inner cavity, allowing the first inner cavity 110 and the second inner cavity 120 to be arranged in parallel in a left-right direction.

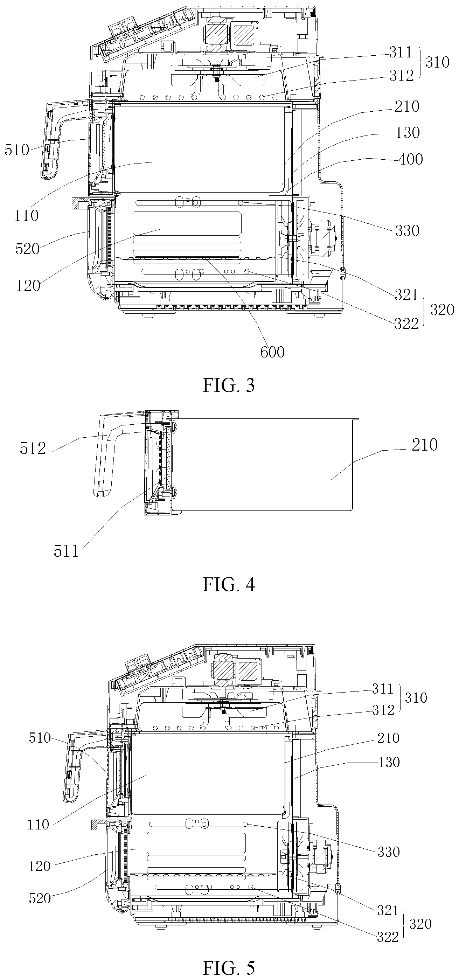

In the following embodiments of the present disclosure, the entire inner cavity and the first inner cavity 110 and the second inner cavity 120 that are formed through dividing of the partition 200 may have various cooking methods, which may be selected from cooking methods known in the culinary field such as an air fryer, an oven, a steamer, a saucepan, a steam oven. A cooking method of the oven is to cook an ingredient through roasting by the heating assembly 300 illustrated in FIG. 3, FIG. 5, FIG. 7, FIG. 9 to FIG. 10, and FIG. 14 to obtain the roasted ingredient. A cooking method of the air fryer is to use flow of hot air to heat an ingredient and blow away moisture on surfaces of the ingredient, to enable the ingredient to achieve a cooking effect like frying. A cooking method of the steamer is to heat water by the heating assembly 300 to generate water vapor to heat an ingredient with steam, thereby obtaining the steamed ingredient. A cooking method of the saucepan is to heat water by the heating assembly 300 to cook an ingredient in hot water, thereby obtaining the stewed ingredient. In the cooking appliance according to the embodiments of the present disclosure, different cooking accessories and heating methods may be selected based on the designed cooking methods to obtain corresponding cooking effects. For example, the first inner cavity 110 may employ the cooking method of the oven, the second inner cavity 120 may employ the cooking method of the air fryer, and the entire inner cavity may employ the cooking method of the oven. For another example, the first inner cavity 110 may employ the cooking method of the steamer, the second inner cavity 120 may employ the cooking method of the saucepan, and the entire inner cavity may employ the cooking method of the steam oven.

In the following embodiments of the present disclosure, as an example, the first inner cavity 110 and the second inner cavity 120 employ the cooking method of the air fryer and the cooking method of the oven, respectively, to illustrate the cooking appliance according to the embodiments of the present disclosure. Also, when the inner cavity is formed into an entire cooking cavity after the partition 200 is removed from the housing 100, the entire inner cavity may carry out the cooking by employing the cooking method of the air fryer or the cooking method of the oven based on the arrangement of the heating assembly 300.

### First Embodiment

In this embodiment, the cooking appliance of the present disclosure is illustrated by taking a cooking appliance comprising a housing 100 and two partitions 200 as an example. As illustrated in FIG. 2, the housing 100 according to this embodiment has an inner cavity and an opening in communication with the inner cavity. An ingredient may be placed into or taken out the inner cavity through the opening.

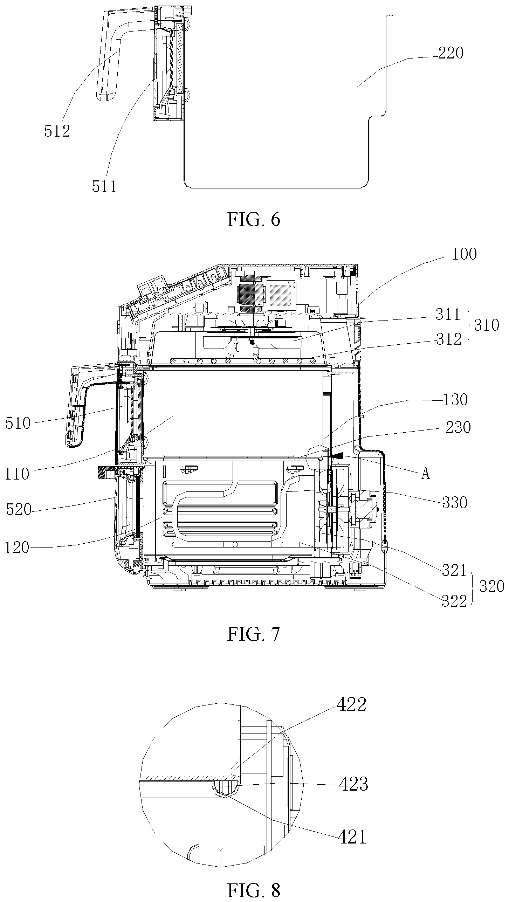

As illustrated in FIG. 4 and FIG. 6, the cooking appliance according to this embodiment is provided with two partitions 200 comprising a first partition 210 and a second partition 220, and descriptions of their structures will be described below. The first partition 210 and the second partition 220 are substantially bucket-like shapes of different depths. After placing the bucket-like bodies in the inner cavity, a space in the bucket-like bodies and a space above bucket-like bodies serve as the first inner cavity 110 for holding the ingredient. When there is a space below bottom walls of the bucket-like bodies, the space functions as the second inner cavity 120 for holding the ingredient. Specific structures of the bucket-like bodies may be adaptively adjusted based on a structure of the inner cavity. In the following embodiments of this present disclosure, the cooking appliance of the present disclosure is illustrated by taking the bucket-like body as illustrated in FIG. 4 and FIG. 6 as an example.

In some embodiments, as illustrated in FIG. 1, the cooking appliance according to embodiments of the present disclosure further comprises a cover assembly 500 connected to the partition 200 and/or movably connected to the housing 100. The cover assembly 500 is configured to cover the opening.

For example, a main body of the cover assembly 500 may be formed as one piece and be connected to the partition 200 or movably connected to the housing 100 to expose or cover both the first inner cavity 110 and the second inner cavity 120. Further, in another exemplary embodiment of the present disclosure, a seal is disposed between the cover assembly 500 and the partition 200. The seal may be disposed at the cover assembly 500, at the partition 200, or at both the cover assembly 500 and the partition 200. The cover assembly 500 is sealingly connected to the partition 200 by the seal. Therefore, air flow between the first inner cavity 110 and the second inner cavity 120 can be isolated at a connection of the cover assembly 500 with the partition 200 to avoid cross-contamination of flavors among the ingredients.

For another example, the main body of the cover assembly 500 is a split structure. The cover assembly 500 comprises a first cover 510 and a second cover 520. The first cover 510 is movably connected to the housing 100 to expose or cover the first inner cavity 110. The second cover 520 is movably connected to the housing 100 to expose or cover the second inner cavity 120.

For another example, the main body of the cover assembly 500 is a split structure. The cover assembly 500 comprises a first cover 510 and a second cover 520. The first cover 510 is connected to the partition 200 to expose or cover the first inner cavity 110. The second cover 520 is movably connected to the housing 100 to expose or cover the second inner cavity 120. An exemplary arrangement of the cover assembly 500 may be adaptively adjusted in combination with a structure of the partition 200.

In an exemplary embodiment, as illustrated in FIG. 1, the cover assembly 500 comprises at least one first cover 510. One of the at least two partitions 200 is removably disposed at the at least one first cover 510. The at least one first cover 510 is configured to partially or completely cover the opening.

For example, the cover assembly 500 comprises only one first cover 510. That is, the cooking appliance according to the embodiments of the present disclosure comprises a first partition 210 and a second partition 220 that have different depths, and is provided with one first cover 510. A side wall of the bucket-like body of the used one of the two partitions 200 is
connected to the first cover 510, and then the connected partition 200 is placed into the housing 100. The partition 200 may be removably connected to the first cover 510 by screws or the like. Since the partitions 200 share the same first cover 510, the number of parts of the cooking appliance can be reduced, reducing a manufacturing cost.

For another example, the cover assembly 500 comprises several first covers 510. In addition, the number of the first covers 510 corresponds to the number of the partitions 200. Each partition 200 is separately disposed at the first cover 510. That is, the cooking appliance comprises a first partition 210 and a second partition 220 that have different depths, and is provided with two first covers 510. The partitions 200 and the first covers 510 are in a one-to-one correspondence. When the cooking appliance has inner cavities of different sizes through the dividing of the partitions 200, it is possible to directly change a combination of the partition 200 having the bucket-like bodies of different depths and the first cover 510 as a whole. Each partition 200 having the bucket-like body of a different depth is provided with the first cover 510 correspondingly, and may be replaced as a whole when changing the partition 200 for the cooking appliance without further disassembling the first cover 510 and the partition 200. Therefore, the partition 200 can be replaced more conveniently.

In an exemplary embodiment, when the first cover 510 is configured to partially cover the opening, the cover assembly 500 further comprises a second cover 520 configured to cover a part of the opening that is uncovered by the first cover 510.

As illustrated in FIG. 1, in this embodiment, when the first cover 510 is connected to the partition 200 to opening or closing the first inner cavity 110, the first cover 510 only covers a part of the opening. Therefore, the cover assembly 500 according to this embodiment is also provided with the second cover 520 configured to open or close the second inner cavity 120. That is, the second cover 520 is configured to cover the part of the opening that is uncovered by the first cover 510.

As illustrated in FIG. 4 and FIG. 6, the cooking appliance according to this embodiment is equipped with a first partition 210 having a relatively shallow bucket-like body depth and a second partition 220 having a relatively deep bucket-like body depth. The first partition 210 and the second partition 220 are detachably connected to a first cover body 511 of a first cover plate, respectively. In an example, the first cover plate body is provided with a first cover handle 512 to facilitate placement or removal of the partition 200 in or from the inner cavity. For example, when the first partition 210 is placed in the inner cavity to divide the inner cavity into the first inner cavity 110 and the second inner cavity 120, the ingredient is placed in a bucket-like body of the first partition 210 and the first partition 210 is placed in the first inner cavity 110. A cooking mode of the air fryer is formed in the first inner cavity 110 through heating of a first heating portion 310. The ingredient is placed on a container such as a bakeware 900 and placed in the second inner cavity 120. A cooking mode of the oven is formed in the second inner cavity 120 through heating of a movable heating portion 330 and a second heating portion 320. When the first partition 210 is removed from the inner cavity and the entire inner cavity is used as the cooking cavity, the ingredient is placed in a bucket-like body of the second partition 220 and the second partition 220 is placed in the inner cavity, the cooking mode of the air fryer is formed in the inner cavity through the heating of the first heating portion 310.

In the above embodiment, as illustrated in FIG. 3 and FIG. 5, a side wall of the bucket-like body of the first partition 210 and a side wall of the bucket-like body of the second partition 220 may be respectively connected to the first cover body 511 to cover a part of the opening corresponding to the first inner cavity 110. Further, an upper part of a side wall of the bucket-like body of the second partition 220 is connected to the first cover body 511 to cover the part of the opening corresponding to the first inner cavity 110. A lower part of the side wall of the bucket-like body of the second partition 220 tappers towards the second inner cavity 120. That is, the first cover body 511 on the side wall of the second partition 220 may only cover the part of the opening corresponding to the first inner cavity 110. Further, to cover a part of the opening corresponding to the second inner cavity 120, in an example, the cooking appliance further comprises a second cover 520. The second cover 520 is movably connected to the housing 100 to allow the second cover 520 to expose or cover the part of the opening corresponding to the second inner cavity 120. As illustrated in FIG. 1, FIG. 3, and FIG. 5, the first cover 510 is configured to only cover the part of the opening part corresponding to the first inner cavity 110. Therefore, the cover assembly 500 of the cooking appliance is further equipped with the second cover 520 to expose or close the part of the opening corresponding to the second inner cavity 120, in such a manner that a relatively independent cooking cavity may be formed in the second inner cavity 120 for cooking the ingredient.

In another example, the second cover 520 comprises a second cover body 521 and a second cover handle 522 disposed at the second cover body 521. As illustrated in FIG. 1, in this embodiment, a bottom edge of the second cover body 521 is movably connected to the housing 100 through being hinged to the housing 100. Further, the second cover handle 522 is disposed at a fixed edge of the second cover body 521 to facilitate the exposing or covering of the part of the opening corresponding to the second inner cavity 120 by the second cover handle 522.

In another example, the partition 200 according to this embodiment is thermally conductive. That is, after the inner cavity of the cooking appliance is divided into the first inner cavity 110 and the second inner cavity 120 by placing the partition 200 in the housing 100, since the partition 200 is a heat conductive member that is thermally conductive, heat conduction may be carried out between the first inner cavity 110 and the second inner cavity 120. For example, when the movable heating portion 330 is located in the second inner cavity 120, the first inner cavity 110 may partially absorb heat of the movable heating portion 330 through conduction of the partition 200. That is, the first inner cavity 110 may be heated or kept warm using the movable heating portion 330.

In another exemplary embodiment of the present disclosure, the partition 200 has a hollow structure. The hollow structure internally has a heat insulation portion. That is, in this embodiment, the partition 200 is thermally insulated. For example, the partition 200 comprises a first housing layer, a second housing layer, and a heat insulating material layer located between the first housing layer and the second housing layer. The heat insulating material layer may be made of a mica sheet or the like. The partition 200 is thermally insulated. Therefore, when the partition 200 is placed in the inner cavity, the heat conduction between the first inner cavity 110 and the second inner cavity 120 can be isolated, preventing cooking processes of the first inner cavity 110 and the second inner cavity 120 from interacting with each other.

In another exemplary embodiment of the present disclosure, as illustrated in FIG. 3 and FIG. 5, the cooking appliance according to this embodiment further comprises a heating assembly 300. The heating assembly 300 further comprises: a first heating portion 310 disposed in the housing 100 or the first inner cavity 110 to heat the first inner cavity 110; and a second heating portion 320 disposed in the housing 100 or the second inner cavity 120 to heat the second inner cavity 120.

The first heating portion 310 is disposed in the housing 100 or the first inner cavity 110 to heat the first inner cavity 110. The second heating portion 320 is disposed in the housing 100 or the second inner cavity 120 to heat the second inner cavity 120. The first heating portion 310 and the second heating portion 320 may be disposed based on cooking methods of the first inner cavity 110 and the second inner cavity 120, respectively. For example, when the first inner cavity 110 is designed to employ the cooking method of the air fryer, the first heating portion 310 may employ a heating mode in which a first fan 311 and a first heating element 312 are comprised, and hot air generated by the first heating portion 310 is used to heat the ingredient. For another example, when the second inner cavity 120 is designed to employ the cooking method of the oven, the second heating portion 320 may employ a heating mode in which a second heating element 322 is comprised, and heat convection generated by the second heating portion 320 is used to heat the ingredient. Also, the movable heating portion 330 may be used in conjunction with the second heating portion to heat the ingredient in the second inner cavity 120. For another example, when the bucket-like body is removed from the housing 100, in the entire inner cavity, the ingredient can be heated by means of the hot air through the first fan 311 and the first heating element 312 to implement the cooking method of the air fryer, or in the entire inner cavity, the ingredient can be heated by means of the heat convection through the second heating element 322 and/or the first heating element 312 to implement the cooking method of the oven. That is, in this disclosure, a combination of different cooking methods of the first inner cavity 110, the second inner cavity 120, or the entire inner cavity can be realized by different arrangements of the first heating portion 310 and the second heating portion 320.

In another exemplary embodiment of the present disclosure, as illustrated in FIG. 3 and FIG. 5, the heating assembly 300 according to this embodiment further comprises a movable heating portion 330 movably disposed in the first inner cavity 110 and/or the second inner cavity 120.

In this embodiment, by moving the movable heating portion 330, a heating distance and a heating range of the movable heating portion 330 for the ingredient can be adjusted to meet different heating requirements of the ingredient. Further, by moving the movable heating portion 330 to avoid the ingredient, the entire inner cavity can be used as the cooking cavity to meet cooking requirements of a larger ingredient.

As illustrated in FIG. 3, the movable heating portion 330 according to this embodiment is disposed in the second inner cavity 120. By moving the movable heating portion 330, the heating distance and the heating range of the movable heating portion 330 for the ingredient can be adjusted to meet different heating requirements of the ingredient. Further, by moving the movable heating portion 330 to avoid the ingredient, the entire inner cavity can be used as the cooking cavity to meet the cooking requirements of a larger ingredient.

In an exemplary embodiment, the partition 200 according to this embodiment is thermally conductive. That is, after the inner cavity of the cooking appliance is divided into the first inner cavity 110 and the second inner cavity 120 by placing the partition 200 into the housing 100, since the partition 200 is thermally conductive, the heat conduction may be carried out between the first inner cavity 110 and the second inner cavity 120. For example, when the movable heating portion 330 is located in the second inner cavity 120, the first inner cavity 110 may partially absorb the heat of the movable heating portion 330 through the conduction of the partition 200. That is, the first inner cavity 110 may be heated or kept warm using the movable heating portion 330.

In another exemplary embodiment, the partition 200 is thermally insulated. For example, the partition 200 comprises a first housing layer, a second housing layer, and a heat insulating material layer located between the first housing layer and the second housing layer. The heat insulating material layer may be made of a mica sheet or the like. The partition 200 is thermally insulated. Therefore, when the partition 200 is placed in the inner cavity, the heat conduction between the first inner cavity 110 and the second inner cavity 120 can be isolated, preventing the cooking processes of the first inner cavity 110 and the second inner cavity 120 from interacting with each other.

In another exemplary embodiment, movement positions of the movable heating portion 330 in the first inner cavity 110 and/or the second inner cavity 120 comprise at least a position where the movable heating portion 330 is located proximate to the partition 200 and a position where the movable heating portion 330 is located proximate to an inner wall of the housing 100. As illustrated in FIG. 3, the movable heating portion 330 according to this embodiment is located in the second inner cavity 120, and the movable heating portion 330 may move between a position where the movable heating portion 330 is positioned proximate to the partition 200 and a position where the movable heating portion 330 is positioned proximate to the inner wall of the housing 100. That is, the inner cavity is divided into the first inner cavity 110 and the second inner cavity 120 for heating the ingredient of a small volume after the partition 200 is placed in the housing 100. By moving the movable heating portion 330, the movable heating portion 330 is located proximate to the partition 200. That is, the movable heating portion 330 is located at a top of the second inner cavity 120. Therefore, the ingredient in the second inner cavity 120 can be heated by means of the movable heating portion 330. In addition, through a heat conduction effect of the partition 200, the ingredient in the first inner cavity 110 can be heated or kept warm. To heat the larger ingredient, the partition 200 may be removed from the housing 100, and the movable heating portion 330 may be brought proximate to the inner wall of the housing 100 through bending, rotating, or the like from the top of the second inner cavity 120, leaving a larger space in the inner cavity for placing the larger ingredient.

When the cooking appliance of the present disclosure operates, in a case where the inner cavity is divided into the first inner cavity 110 and the second inner cavity 120 by the partition 200, the first heating portion 310 may operate separately to cook the ingredient in the first inner cavity 110, the second heating portion 320 may operate separately to cook the ingredient in the second inner cavity 120, the first heating portion 310 and the second heating portion 320 may operate simultaneously to cook simultaneously the ingredients in the first inner cavity 110 and in the second inner cavity 120, and the first heating portion 310, the second heating portion 320, and the movable heating portion 330 may operate simultaneously to cook simultaneously the ingredients in the first inner cavity 110 and in the second inner cavity 120. In addition, the movable heating portion 330 is used to heat the first inner cavity 110 and the second inner cavity 120. Further, the movable heating portion 330 may operate separately to keep the ingredient in the first inner cavity 110 or the ingredient in the second inner cavity 120 warm. Further, when the bucket-like body is removed from the inner cavity, the first heating portion 310 may operate separately to cook the ingredient in the inner cavity, the second heating portion 320 may operate separately to cook the ingredient in the inner cavity, the first heating portion 310 and the second heating portion 320 may operate simultaneously to cook the ingredients in the inner cavity simultaneously, the first heating portion 310, the second heating portion 320, and the movable heating portion 330 may operate simultaneously to cook the ingredients in the inner cavity simultaneously, and the inner cavity may be heated by the movable heating portion 330. That is, in the cooking appliance according to the embodiments of the present disclosure, several manners of controlling the heating assembly 300 can be performed by the control assembly to achieve different cooking purposes.

As illustrated in FIG. 3 and FIG. 5, in this embodiment, the first heating portion 310 comprises a first fan 311 and a first heating element 312, which are disposed at a top of the first inner cavity 110. The second heating portion 320 comprises a second fan 321 and a second heating element 322. The second fan 321 is disposed on a side wall of the second inner cavity 120. The second heating member 322 is disposed at a bottom of the second inner cavity 120. Also, the movable heating portion 330 is movably disposed in the second inner cavity 120.

In an exemplary embodiment, as illustrated in FIG. 2 and FIG. 3, the housing 100 of the present disclosure is provided with a mounting fitting 400 on an inner wall of the housing 100. The mounting fitting 400 is configured to be connected to the partition 200. In the present disclosure, to allow the partition 200 to be removably disposed in the housing 100, the mounting fitting 400 is disposed on the inner wall of the housing 100. The bucket-like body is placed into a predetermined position of the inner cavity by the mounting fitting 400 to form the first inner cavity 110 and the second inner cavity 120. Further, in another exemplary embodiment of the present disclosure, the mounting fitting 400 according to this embodiment is sealingly connected to the partition 200. By sealingly connecting the mounting fitting 400 to the partition 200, that is, the air flow is isolated between the first inner cavity 110 and the second inner cavity 120, when the first inner cavity 110 and the second inner cavity 120 cook different ingredients, respectively, it is possible to avoid the cross-contamination of flavors among the ingredients, affecting the cooking effect of the ingredients. Further, in another exemplary embodiment of the present disclosure, the mounting fitting 400 according to this embodiment and the inner wall of the housing are integrally formed. That is, by changing a shape of the inner wall of the housing 100 itself or the like, the partition 200 is supported or fastened by the inner wall of the housing 100, in such a manner that the inner cavity is divided into the first inner cavity 110 and the second inner cavity 120 by the partition 200. In addition, since the mounting fitting 400 and the inner wall are integrally formed, the number of parts of the cooking appliance can be reduced, facilitating assembly, and accumulation of ingredient residue or the like due to a connection gap between the mounting fitting 400 and the inner wall can be avoided.

In other embodiments, the mounting fitting 400 may also be a separate structure, and may be fixed to the inner wall of the housing 100 by a connector or the like.

In the present disclosure, the partition 200 may divide the inner cavity into the first inner cavity 110 and the second inner cavity 120 that are arranged in parallel in the vertical direction. For example, the first inner cavity 110 and the second inner cavity 120 are arranged in parallel in a left-right direction. In this case, the first inner cavity 110 and the second inner cavity 120 may be divided by one side wall of the partition 200. The side wall is tightly attached to the mounting fitting 400 to separate the first inner cavity 110 from the second inner cavity 120. The partition 200 may divide the inner cavity into the first inner cavity 110 and the second inner cavity 120 that are stacked together in a horizontal direction. For example, the first inner cavity 110 and the second inner cavity 120 are stacked in an up-down direction. In this case, the first inner cavity 110 and the second inner cavity 120 may be divided by a top wall or a bottom wall of the bucket-like body structure of the partition 200.

In this embodiment, as illustrated in FIG. 3 and FIG. 5, structures of the cooking appliance such as the housing 100, the bucket-like body, and the heating assembly 300 will be further described in such a manner that the first inner cavity 110 and the second inner cavity 120 of the cooking appliance are stacked in the up-down direction.

In an exemplary embodiment, the bucket-like body is provided with a flange on an outer side wall of the bucket-like body. The mounting fitting 400 comprises a groove for accommodating the flange or a rib 421 for carrying the flange. The groove or the rib 421 extends along the inner wall of the housing 100 to allow the flange of the bucket-like body to be located in the groove, in such a manner that the bucket-like body and the groove are sealingly connected to each other, or to allow the flange of the bucket-like body to be attached to the rib 421 so as to isolate the air flow between the first inner cavity 110 and the second inner cavity 120.

In an exemplary embodiment, the mounting fitting 400 further comprises a catch block 422 disposed above the rib 421. The flange is tightly pressed against the rib 421 by the catch block 422. That is, several separate catch blocks 422 are disposed above the rib 421 to allow the flange of the bucket-like body to be tightly pressed against the rib 421. In another exemplary embodiment of the present disclosure, a sealing groove is formed at a contact position between the rib 421 and the flange. A sealing gasket 423 is disposed in the sealing groove to increase sealing between the rib 421 and the flange. The sealing gasket 423 is disposed in the sealing groove, and can be tightly attached to the flange of the bucket-like body to isolate air circulation between the first inner cavity 110 and the second inner cavity 120 and prevent the sealing gasket 423 from being separated from the rib 421.

In an exemplary embodiment, at least two grooves or ribs 421 of the mounting fitting 400 are provided and arranged at different positions on the inner wall. For example, at least two mounting fittings 400 are provided in the vertical direction or in the horizontal direction. By providing more than two mounting fittings 400, a position of the bucket-like body in the inner cavity may be adjusted in the vertical direction or the horizontal direction. That is, a ratio of a volume of the first inner cavity 110 to a volume of the second inner cavity 120 can be adjusted. Therefore, a size or a proportion of the first inner cavity 110 or the second inner cavity 120 can be adjusted based on a volume of the ingredient, and thus the first inner cavity 110 and/or the second inner cavity 120 as the cooking cavity can be adapted to the volume of the ingredient, which can not only save energy, but also improve a cooking efficiency. In this embodiment, the inner wall of the housing 100 may be provided with a plurality of mounting fittings 400 of different heights. A corresponding bucket-like body has a bucket-like body opening on the top wall. An upper end of the inner cavity into which the bucket-like body will be received is formed as the first inner cavity 110, and a lower end is formed as the second inner cavity 120. The first inner cavity 110 and the second inner cavity 120 are separated from each other by the bottom wall of the bucket-like body to allow the bucket-like body to have a different height in the inner cavity, and thus the ratio of the volume of the first inner cavity 110 and the volume of the second inner cavity 120 is different.

In another exemplary embodiment, as illustrated in FIG. 3 and FIG. 5, the mounting fitting 400 is a protruding platform configured to be tightly attached to an outer side wall of the bucket-like body or a bottom wall of the bucket-like body. As illustrated in FIG. 4 and FIG. 6, in this embodiment, the bucket-like body has a bucket-like body opening on the top wall of the bucket-like body. When the bucket-like body is placed in the inner cavity, the outer side wall of the bucket-like body or the bottom wall of the bucket-like body is tightly attached to the protruding platform. In this way, the inner cavity is divided into the first inner cavity 110 and the second inner cavity 120 using the bottom wall of the bucket-like body.

### Second Embodiment

A difference between the second embodiment and the first embodiment is in a structure of the partition 200 and an arrangement of a cover plate assembly. In this embodiment, the difference between the second embodiment and the first embodiment is illustratively described. An implementation in the first embodiment that may be used in the second embodiment will be omitted here.

As illustrated in FIG. 5 to FIG. 10, the cooking appliance according to this embodiment is provided with three partitions 200 comprising a third partition 230, a fourth partition 240, and a fifth partition 250, and their structures will be described. A general shape of the third partition 230 is substantially plate-like. A general shape of the fourth partition 240 and a general shape of the fifth partition 250 each is substantially disc-like. Upper spaces of the third partition 230, the fourth partition 240, and the fifth partition 250 are used for the placement of the ingredient. Exemplary structures of the third partition 230, the fourth partition 240, and the fifth partition 250 may be adaptively adjusted based on the structure of the inner cavity.

As illustrated in FIG. 5 to FIG. 10, the cooking appliance according to this embodiment comprises a housing 100, the third partition 230, the fourth partition 240, the fifth partition 250, a heating assembly 300, and a mounting fitting 400. A group of mounting fittings 400 is disposed on the inner wall of the housing 100. An edge of the third partition 230, opening edges of bucket-like body structures of the fourth partition 240, and the fifth partition 250 are connected to the inner wall of the housing 100 by the mounting fittings 400. In this embodiment, the third partition 230 and the fourth partition 240 are each independently placed in the housing 100 horizontally to divide the inner cavity, in such a manner that the first inner cavity 110 and the second inner cavity 120 are stacked together in the up-down direction. The first inner cavity 110 and the second inner cavity 120 are used as cooking cavities for cooking the ingredients. The fifth partition 250 is horizontally placed in the housing 100, and the entire inner cavity serves as the cooking cavity for cooking the ingredients. Since edges of the third partition 230, the fourth partition 240, and fifth partition 250 are at different distances from their respective bottoms, a volume ratio of the first inner cavity 110 above the partition 200 to the second inner cavity 120 below the partition 200 is different after the third partition 230, the fourth partition 240, and fifth partition 250 are connected to the housing 100, respectively. In addition, a suitable partition 200 among the third partition 230, the fourth partition 240, and fifth partition 250 may be placed in the housing 100 based on the volume of the ingredient to allow the divided first inner cavity 110 and the divided second inner cavity 120 to match the volume of the ingredient. Therefore, volume requirements for cooking the ingredients can be met. In this embodiment, the volume ratio of the first inner cavity 110 to the second inner cavity 120 is changed by replacing the partition 200.

In an exemplary embodiment, a main body of the cover assembly 500 according to this embodiment is formed as one piece. That is, the entire opening can be exposed or covered by the cover assembly 500.

In another exemplary embodiment of the present disclosure, as illustrated in FIG. 7, the cover assembly 500 is a split structure. The cover assembly 500 comprises a first cover 510 and a second cover 520. The opening on the housing 100 is divided into two parts by the mounting fitting 400. The first cover 510 and the second cover 520 are each used for exposing or covering the two parts of the opening. In an example, the first cover 510 and the second cover 520 are movably disposed at the housing 100 to facilitate the opening or the closing thereof.

As illustrated in FIG. 7, in another exemplary embodiment of the present disclosure, the first cover 510 according to this embodiment comprises a first cover body 511 and a first cover handle 512 disposed at the first cover body 511. The first cover body 511 and the housing 100 are movably connected to each other by a hinge or the like. When the partition 200 is connected to the inner wall of the housing 100 by the mounting fitting 400, the first cover body 511 covers a part of the opening above the mounting fitting 400 in the inner cavity, to form a sealed first inner cavity 110 among the partition 200, the first cover body 511, and the inner wall of the housing 100 for cooking the ingredients.

As illustrated in FIG. 7, the second cover 520 according to this embodiment comprises a second cover body 521 and a second cover handle 522 disposed at the second cover body 521. The second cover body 521 and the housing 100 are movably connected to each other by the hinge or the like. The second cover body 511 can cover a part of the opening below the mounting fitting 400 in the inner cavity, to form a sealed second inner cavity 120 among the partition 200, the second cover body 521, and the inner wall of the housing 100 for cooking the ingredients.

In an exemplary embodiment, the mounting fitting 400 may be either a groove or a rib 421. The inner cavity is divided into the first inner cavity 110 and the second inner cavity 120 in the up-down direction by inserting an edge of the partition 200 into the groove or placing the partition 200 above the rib 421. In another exemplary embodiment of the present disclosure, the groove or the rib 421 may extend along the inner wall of the housing 100 to allow the edge of the partition 200 to be located in the groove. In this way, the partition 200 is sealingly connected to the groove or the partition 200 is attached to the rib 421 to isolate the air flow between the first inner cavity 110 and the second inner cavity 120.

In an exemplary embodiment, as illustrated in FIG. 8, the mounting fitting 400 according to this embodiment further comprises a catch block 422 disposed above the rib 421. An edge of the partition is tightly pressed against the rib 421 by the catch block 422. A plurality of catch blocks 422 are provided, and in an example has a predetermined deformation elasticity. In addition, there is a gap between the plurality of catch blocks 422 and the flange to accommodate the edge of the partition. When the edge of the partition is placed above the flange, the catch block 422 can clamp tightly the partition against the flange. Further, in an example, the sealing groove is disposed at the rib 421. The sealing gasket 423 is disposed in the sealing groove. The sealing gasket 423 is disposed in the sealing groove, and can be tightly attached to the edge of the partition, isolating the air circulation between the first inner cavity 110 and the second inner cavity 120, and preventing the sealing gasket 423 from being separated from the rib 421.

In an exemplary embodiment, the at least two mounting fittings 400 are provided in the vertical direction or in the horizontal direction. By providing more than two mounting fittings 400, it is possible to adjust the position of the partition 200 in the inner cavity in the vertical direction or the horizontal direction. That is, the ratio of the volume of the first inner cavity 110 to the volume of the second inner cavity 120 can be adjusted. Therefore, the size or the proportion of the first inner cavity 110 or the second inner cavity 120 can be adjusted based on the volume of the ingredient, and thus the first inner cavity 110 and/or the second inner cavity 120 as the cooking cavity can be adapted to the volume of the ingredient, which can not only save energy, but also improve the cooking efficiency. In this embodiment, the inner wall of the housing 100 may be provided with a plurality of mounting fittings 400 of different heights, in such a manner that the partition 200 is located at different elevations in the inner cavity, and thus the ratio of the volume of the first inner cavity 110 to the volume of the second inner cavity 120 is different. That is, in this embodiment, the ratio of the volume of the first inner cavity 110 to the volume of the second inner cavity 120 is changed mainly by adjusting a height of the partition in the inner cavity.

Embodiments of the present disclosure will be described below in combination with the accompanying drawings and with reference to specific embodiments.

### First Embodiment

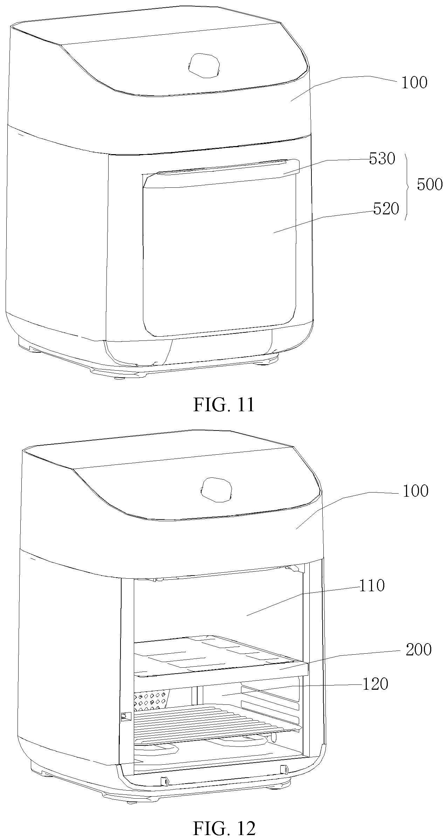

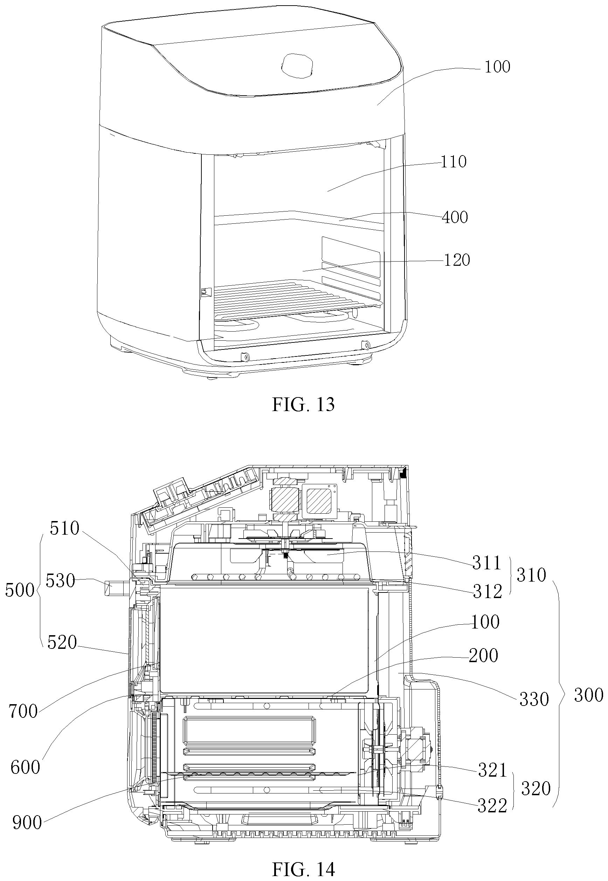

As illustrated in FIG. 11 and FIG. 14, a cooking appliance according to this embodiment comprises: a housing 100 having an inner cavity and an opening in communication with the inner cavity; and a partition 200 removably disposed in the housing 100 and located in the inner cavity. The inner cavity is divided into a first inner cavity110 and a second inner cavity 120 by the partition 200.

In an exemplary embodiment, the cooking appliance according to the embodiments of the present embodiment further comprises a heating assembly 300. The heating assembly 300 comprises at least a movable heating portion 330 movably disposed in the first inner cavity 110 and/or the second inner cavity 120.

In the above cooking appliance, the partition 200 is removably disposed in the housing. When the partition 200 is placed in the inner cavity, the inner cavity is divided into the first inner cavity 110 and the second inner cavity 120 by the partition 200. Therefore, two cooking cavities of small volumes are formed in the cooking appliance to cook ingredients of small volumes. When the partition 200 is removed from the inner cavity, the entire inner cavity as the cooking cavity in the cooking appliance can cook ingredient of a large volume. In the present disclosure, by removably disposing the partition 200, a volume of the cooking cavity for accommodating the ingredients in the cooking appliance can be adjusted to meet cooking requirements of ingredients of different volumes.

Further, the heating assembly of the cooking appliance comprises at least the movable heating portion 330 movably disposed in the first inner cavity 110 and/or the second inner cavity 120. By moving the movable heating portion 330, the heating distance and the heating range of the movable heating portion 330 for the ingredient can be adjusted to meet different heating requirements of the ingredients. Also, by moving the movable heating portion 330 to avoid the ingredients the entire inner cavity can be used as the cooking cavity to meet the cooking requirements of a larger ingredient.

In an exemplary embodiment, a side of the housing 100 according to this embodiment has an opening in communication with the inner cavity. As illustrated in FIG. 12 to FIG. 2, in this embodiment, the opening formed at the housing 100 is in communication with the inner cavity, allowing the ingredient to be placed into the inner cavity or taken out of the inner cavity through the opening.

In an exemplary embodiment, as illustrated in FIG. 11 and FIG. 14, the cooking appliance according to this embodiment further comprises a door assembly 5000 disposed at the housing 100 to expose or cover the openings corresponding to both the first inner cavity 110 and the second inner cavity 120. In this embodiment, by opening or closing the opening corresponding to both the first inner cavity 110 and the second inner cavity 120 by the door assembly 5000, inconvenient opening and closing can be avoided in a case where the first inner cavity 110 and the second inner cavity 120 are separately provided with a door body, respectively.

In an exemplary embodiment, as illustrated in FIG. 14, a sealing strip 600 is disposed between the door assembly 5000 and the partition 200 to completely isolate the first inner cavity 110 from the second inner cavity 120.

In the cooking appliance according to this embodiment, the sealing strip 600 is disposed between the door assembly 5000 and the partition 200. By the partition 200 and the sealing strip 600, the first inner cavity 110 is completely isolated from the second inner cavity 120. That is, the air flow between the first inner cavity 110 and the second inner cavity 120 can be isolated, avoiding effectively the cross-contamination of flavors among the ingredients caused by the air flow in a cooking process of the ingredients in the first inner cavity 110 and the second inner cavity 120.

In an exemplary embodiment, the sealing strip 600 according to this embodiment is disposed at the door assembly 5000 and/or at the partition 200. The sealing strip 600 may be made of a material that is heat-resistant and has sealing properties such as silicone. The sealing strip 600 may be disposed at the door assembly 5000. When an opening of the housing 100 is covered by the door assembly 5000, the sealing strip 600 is correspondingly sealed against the partition 200, and thus communication between the first inner cavity 110 and the second inner cavity 120 can be isolated between the door assembly 5000 and the partition 200.

In an exemplary embodiment, as illustrated in FIG. 14, the door assembly 5000 comprises a door frame 5100, a viewable door body 5200, a door handle 5300, and a locking structure. The door frame 5100 has a side hinged to the housing 100. The viewable door body 5200 is fixedly disposed at the door frame 5100. The door frame 5100 is a main support structure of the door assembly 5000 for fixing the viewable door body 5200 is connected to the housing 100.

The door handle 5300 is disposed at another side of the door frame 5100 opposite to the side of the door frame 5100 hinged to the housing 100. Further, in an example, the viewable door body 5200 comprises a viewable glass and a viewable plastic. The viewable glass is fixed at a side of the door frame 5100 adjacent to the inner cavity. The viewable plastic is fixed at a side of the door frame 5100 away from the inner cavity to form a middle viewable area and a peripheral non-viewable on the viewable door body 5200.

The locking structure disposed at the other side of the door frame 5100 opposite to the side hinged to the housing 100. In this embodiment, a bottom end of the door frame 5100 is hinged to the housing 100. In an example, the locking structure is disposed at a top end of the door frame 5100. By the locking structure, the door assembly 5000 can be locked and fixed to the housing 100 when the opening is covered, avoiding heat leakage.

In another exemplary embodiment of the present disclosure, the locking structure may employ a combination of a locking buckle and an elastic thimble buckle. For example, the locking buckle is disposed at the top end of the door frame 5100. The elastic thimble is disposed at the opening of the housing 100. When the door assembly 5000 closes the opening, the door assembly 5000 is locked by the locking buckle and the elastic thimble buckle.

In an exemplary embodiment, a sealing ring is disposed between the viewable glass and the door frame 5100 according to this embodiment. Further, the viewable door body 5200 further comprises a heat insulation block disposed at a region between the viewable glass and the viewable plastic corresponding to a non-display area of the viewable door body 5200. The sealing ring may be made of a material such as silicone, and is configured to prevent steam or the like in the inner cavity from escaping from a region between the viewable glass and the door frame 5100. By providing the heat insulation block, a temperature rise of the viewable plastic and an outer housing frame can be further avoided, which in turn avoids hazard of scalding.

In an exemplary embodiment, the viewable door body 5200 further comprises an inner housing frame and an outer housing frame. The viewable glass is pressed against the door frame 5100 by the inner housing frame. The viewable plastic is pressed against the door frame 5100 by the outer housing frame. That is, in this embodiment, the viewable glass and the viewable plastic are pressed against the door frame 5100 by the inner housing frame and the outer housing frame, respectively. In addition, the sealing ring is also disposed between the viewable glass and the door frame 5100, forming a heat insulation cavity among the viewable glass, the viewable plastic, and the door frame 5100. The sealing ring can prevent the steam in the inner cavity from entering the heat insulation cavity to prevent temperatures of the viewable plastic and the housing frame from rising, which in turn avoids the hazard of scalding.

As illustrated in FIG. 11, in this embodiment, the bottom end of the door frame 5100 is hinged to the housing 100. In an example, the door handle 5300 is disposed at the top end of the door frame 5100 to allow the door assembly 5000 to be opened or closed effortlessly. In other embodiments, the door frame 5100 may be hinged to the housing 100 with a side edge. In an example, the door handle 5300 is disposed at an opposite side edge to allow the door assembly 5000 to be opened or closed effortlessly by the door handle 5300.

In the present disclosure, the housing 100 of the cooking appliance may comprise an inner wall and a shell surrounding the inner wall. There is a predetermined gap between the inner wall and the shell for arrangements of some conventional components of the cooking appliance, such as a control component, a detection component. Corresponding arrangement may be made as desired by those skilled in the art, and thus details thereof will be omitted here.

In the present disclosure, the partition 200 of the cooking appliance may have various structural forms, such as a disc-like shape, a bucket-like shape, or a plate-like shape, which may be selected based on needs of the cooking appliance. In the following embodiments of the present disclosure, the partition 200 will be described below taking a plate-like partition as an example.

In this embodiment, the partition 200 is horizontally placed into the housing 100 to divide the inner cavity, in such a manner that the first inner cavity 110 and the second inner cavity 120 are stacked together in an up-down direction.

In other embodiments, the partition 200 may also be vertically placed into the housing 100 to divide the inner cavity, in such a manner that the first inner cavity 110 and the second inner cavity 120 are arranged in parallel in a left-right direction.

In the present disclosure, the entire inner cavity and the first inner cavity 110, and the second inner cavity 120 that are formed through the dividing of the partition 200 may have various cooking methods, which may be selected from cooking methods known in the culinary field such as the air fryer, the oven, the steamer, the saucepan, the steam oven. A cooking method of the oven is to cook an ingredient by roasting the heating assembly 300 to obtain the roasted ingredient. A cooking method of the air fryer is to use flow of hot air to heat an ingredient and blow away moisture on surfaces of the ingredient, to enable the ingredient to achieve a cooking effect like frying. A cooking method of the steamer is to heat water by the heating assembly 300 to generate water vapor to heat an ingredient with steam, thereby obtaining the steamed ingredient. A cooking method of the saucepan is to heat water by the heating assembly 300 to cook an ingredient in hot water, thereby obtaining the stewed ingredient. In the cooking appliance according to the present disclosure, different cooking accessories and heating methods may be selected in the cooking appliance based on the designed cooking methods to obtain corresponding cooking effects. For example, the first inner cavity 110 may employ the cooking method of the oven, the second inner cavity 120 may employ the cooking method of the air fryer, and the entire inner cavity may employ the cooking method of the oven. For another example, the first inner cavity 110 may employ the cooking method of the steamer, the second inner cavity 120 may employ the cooking method of the saucepan, and the entire inner cavity may employ the cooking method of the steam oven.

In this embodiment, as illustrated in FIG. 14, the first inner cavity 110 and the second inner cavity 120 may employ the cooking method of the air fryer and the cooking method of the oven, respectively. Also, when the inner cavity is formed into the entire cooking cavity after the partition 200 is removed from the housing 100, the entire inner cavity may carry out the cooking by employing the cooking method of the air fryer or the cooking method of the oven based on the arrangement of the heating assembly 300.

In an exemplary embodiment, as illustrated in FIG. 14, the heating assembly 300 further comprises a first heating portion 310 and a second heating portion 320. The first heating portion 310 is disposed in the housing 100 or the first inner cavity 110 to heat the first inner cavity 110. The second heating portion 320 is disposed in the housing 100 or the second inner cavity 120 to heat the second inner cavity 120. For example, the first heating portion 310 and the second heating portion 320 are respectively disposed in a gap between the inner wall of the housing 100 and the shell. In addition, the first inner cavity 110 and the second inner cavity 120 are heated by forming corresponding air outlets on the inner wall. As another example, the first heating portion 310 and the second heating portion 320 are disposed in the first inner cavity 110 and the second inner cavity 120, respectively, and are disposed at corresponding positions on the inner wall of the housing 100. The first heating portion 310 and the second heating portion 320 may be adaptively disposed and adjusted based on the cooking methods of the first inner cavity 110 and the second inner cavity 120, respectively. For example, when the first inner cavity 110 is designed to employ the cooking method of the air fryer, the first heating portion 310 may employ a heating mode in which the first fan 311 and the first heating element 312 are comprised, and the hot air generated by the first heating portion 310 is used to heat the ingredient. For another example, when the second inner cavity 120 is designed to employ the cooking method of the oven, the second heating portion 320 may employ a heating mode in which the second heating element 322 is comprised, and the heat convection generated by the second heating portion 320 is used to heat the ingredient. Also, the movable heating portion 330 may be used in conjunction with the second heating portion to heat the ingredient in the second inner cavity 120. For another example, when the partition 200 is removed from the housing 100, in the entire inner cavity, the ingredient can be heated by means of the hot air through the first fan 311 and the first heating member 312 to implement the cooking method of the air fryer, or in the entire inner cavity, the ingredients can be heated by means of the heat convection through the second heating member 322 and/or the first heating member 312 to implement the cooking method of the oven. That is, in this disclosure, a combination of different cooking methods of the first inner cavity 110, the second inner cavity 120, or the entire inner cavity can be realized by different arrangement methods of the first heating portion 310 and the second heating portion 320.

When the cooking appliance according to the embodiments of the present disclosure operates, in a case where the inner cavity is divided into the first inner cavity 110 and the second inner cavity 120 by the partition 200, the first heating portion 310 may operate separately to cook the ingredient in the first inner cavity 110, the second heating portion 320 may operate separately to cook the ingredient in the second inner cavity 120, the first heating portion 310 and the second heating portion 320 may operate simultaneously to cook simultaneously the ingredients in the first inner cavity 110 and in the second inner cavity 120, and the first heating portion 310, the second heating portion 320, and the movable heating portion 330 may operate simultaneously to cook simultaneously the ingredients in the first inner cavity 110 and in the second inner cavity 120. In addition, the movable heating portion 330 is used to heat the first inner cavity 110 and the second inner cavity 120. Further, the movable heating portion 330 may operate separately to keep the ingredients in the first inner cavity 110 or the ingredients in the second inner cavity 120 warm. Further, when the partition 200 is removed from the inner cavity, the first heating portion 310 may operate separately to cook the ingredient in the inner cavity, the second heating portion 320 may operate separately to cook the ingredient in the inner cavity, the first heating portion 310 and the second heating portion 320 may operate simultaneously to cook the ingredients in the inner cavity, the first heating portion 310, the second heating portion 320, and the movable heating portion 330 may operate simultaneously to cook the ingredients in the inner cavity, and the inner cavity may be heated by the movable heating portion 330. That is, in the cooking appliance according to the embodiments of the present disclosure, several manners of controlling the heating assembly 300 can be performed by the control assembly to achieve different cooking purposes.

As illustrated in FIG. 14, in this embodiment, the first heating portion 310 comprises a first fan 311 and a first heating member 312. The first heating portion 310 is disposed at the top of the first inner cavity 110. The second heating portion 320 comprises a second fan 321 and a second heating element 322. The second fan 321 is disposed on a side wall 710 of the second inner cavity 120. The second heating element 322 is disposed at the bottom of the second inner cavity 120. Also, the movable heating portion 330 is movably disposed in the second inner cavity 120.

In an exemplary embodiment, the partition 200 may also be thermally conductive. That is, after the inner cavity of the cooking appliance is divided into the first inner cavity 110 and the second inner cavity 120 by placing the partition 200 in the housing 100, since the partition 200 is a heat conductive member that is thermally conductive, the heat conduction may be carried out between the first inner cavity 110 and the second inner cavity 120. For example, when the movable heating portion 330 is located in the second inner cavity 120, the first inner cavity 110 may partially absorb the heat of the movable heating portion 330 through the conduction of the partition 200. That is, the first inner cavity 110 may be heated or kept warm using the movable heating portion 330.

In another exemplary embodiment of the present disclosure, the partition 200 has a hollow structure. The hollow structure internally has a heat insulation portion. That is, in this embodiment, the partition 200 is thermally insulated. For example, the partition 200 comprises a first housing layer, a second housing layer, and a heat insulating material layer located between the first housing layer and the second housing layer. The heat insulating material layer may be made of a mica sheet or the like. The partition 200 is thermally insulated. Therefore, when the partition 200 is placed in the inner cavity, the heat conduction between the first inner cavity 110 and the second inner cavity 120 can be isolated, preventing the cooking processes of the first inner cavity 110 and the second inner cavity 120 from interacting with each other.

Further, in an example, movement positions of the movable heating portion 330 in the first inner cavity 110 and/or the second inner cavity 120 comprise at least a position where the movable heating portion 330 is located proximate to the partition 200 and a position where the movable heating portion 330 is located proximate to an inner wall of the housing 100. As illustrated in FIG. 14, the movable heating portion 330 according to this embodiment is located in the second inner cavity 120, and the movable heating portion 330 may move between a position where the movable heating portion 330 is positioned proximate to the partition 200 and a position where the movable heating portion 330 is positioned proximate to the inner wall of the housing 100. That is, the inner cavity is divided into the first inner cavity 110 and the second inner cavity 120 for heating the ingredient of a small volume after the partition 200 is placed in the housing 100. By moving the movable heating portion 330, the movable heating portion 330 is located proximate to the partition 200. That is, the movable heating portion 330 is located at the top of the second inner cavity 120. Therefore, the ingredient in the second inner cavity 120 can be heated by means of the movable heating portion 330. In addition, through the heat conduction effect of the partition 200, the ingredient in the first inner cavity 110 can be heated or kept warm. To heat the larger ingredient, the partition 200 may be removed from the housing 100, and the movable heating portion 330 may be brought proximate to the inner wall of the housing 100 through bending, rotating, or the like from the top of the second inner cavity 120, leaving a larger space in the inner cavity for placing the larger ingredient.

In an exemplary embodiment, as illustrated in FIG. 14, the inner wall of the housing 100 according to this embodiment is provided with a mounting fitting 400 for the arrangement of the partition 200. In the present disclosure, to enable the partition 200 to be removably disposed at the housing 100, the mounting fitting 400 is disposed on the inner wall of the housing 100. The partition 200 is placed into a predetermined position of the inner cavity by the mounting fitting 400 to form the first inner cavity 110 and the second inner cavity 120. Further, in another exemplary embodiment of the present disclosure, the mounting fitting 400 according to this embodiment is sealingly connected to the partition 200. By sealingly connecting the mounting fitting 400 to the partition 200, that is, the air flow is isolated between the first inner cavity 110 and the second inner cavity 120, when the first inner cavity 110 and the second inner cavity 120 cook different ingredients, respectively, it is possible to avoid the cross-contamination of flavors among the ingredients, affecting the cooking effect of the ingredients.

As illustrated in FIG. 13 and FIG. 2, the mounting fitting 400 according to this embodiment and the inner wall are integrally formed. That is, by changing the shape of the inner wall of the housing 100 itself or the like, the partition 200 is supported or fastened by the inner wall of the housing 100, in such a manner that the inner cavity is divided into the first inner cavity 110 and the second inner cavity 120 by the partition 200. In addition, since the mounting fitting 400 and the inner wall are integrally formed, the number of parts of the cooking appliance can be reduced, facilitating assembly, and accumulation of ingredient residue or the like due to a connection gap between the mounting fitting 400 and the inner wall can be avoided.

In other embodiments, the mounting fitting 400 may also be a separate structure, and may be fixed to the inner wall of the housing 100 by the connector or the like.

In an exemplary embodiment, when the inner cavity is vertically divided by the partition 200 into the first inner cavity 110 and the second inner cavity 120 that are arranged in parallel, for example, the first inner cavity 110 and the second inner cavity 120 are arranged in parallel in the left-right direction, the mounting fitting 400 is a groove in an example. The inner cavity is divided into the first inner cavity 110 and the second inner cavity 120 in the left-right direction by inserting the partition 200 into the groove. In an example, the groove extends along the inner wall of the housing 100 to allow the edges of the partition 200 to be located in the groove. In this way, the partition 200 is sealingly connected to the groove to isolate the air flow between the first inner cavity 110 and the second inner cavity 120. Or, when the inner cavity is horizontally divided by the partition 200 into the first inner cavity 110 and the second inner cavity 120 that are stacked together, as illustrated in FIG. 12, in this embodiment, the first inner cavity 110 and the second inner cavity 120 are stacked together in the up-down direction, the mounting fitting 400 may be a groove or a rib. The inner cavity is divided into the first inner cavity 110 and the second inner cavity 120 in the up-down direction by inserting the partition 200 into the groove or placing the partition 200 above the rib. In an example, the groove or the rib may extend along the inner wall of the housing 100 to allow the edges of the partition 200 to be located in the groove. In this way, the partition 200 is sealingly connected to the groove to or the partition 200 is attached to the rib to prevent air from flowing between the first inner cavity 110 and the second inner cavity 120. In an example, several separate catch blocks may be disposed above the rib to press the partition 200 tightly against the rib. In an example, a U-shaped groove is formed at a contact between the rib and the partition 200. The sealing gasket is disposed in the U-shaped groove to increase sealing between the rib and the partition 200.

In an exemplary embodiment, at least two mounting fittings 400 are provided in the vertical direction or in the horizontal direction. By providing more than two mounting fittings 400, it is possible to adjust the position of the partition 200 in the inner cavity in the vertical direction or the horizontal direction. That is, a ratio of a volume of the first inner cavity 110 to a volume of the second inner cavity 120 can be adjusted. Therefore, a size or a proportion of the first inner cavity 110 or the second inner cavity 120 can be adjusted based on a volume of the ingredient, and thus the first inner cavity 110 and/or the second inner cavity 120 as the cooking cavity can be adapted to the volume of the ingredient, which can not only save energy, but also improve the cooking efficiency. As illustrated in FIG. 12, in this embodiment, the inner wall of the housing 100 may be provided with the plurality of mounting fittings 400 of different heights, in such a manner that the partition 200 is located different elevations in the inner cavity, and thus the volume of the first inner cavity 110 is different from the volume of the second inner cavity 120.

In an exemplary embodiment, as illustrated in FIG. 14, the cooking appliance further comprises at least one inner tub 700. Each of the at least one inner tub 700 is removably disposed in the inner cavity, in the first inner cavity 110, or in the second inner cavity 120. The at least one inner tub 700 has a different structure or size based on its arrangement position. When the inner tub 700 is disposed in the entire inner cavity, and thus the inner tub 700 may have a large volume, which is suitable for an ingredient of a large-volume to be placed in the inner tub 700, and then the inner tub 700 is placed in the inner cavity for cooking. When the inner tub 700 is disposed in the first inner cavity 110, and thus the inner tub 700 may have a small volume, which is suitable for an ingredient of small-volume to be placed in the inner tub 700 and then the inner tub 700 is placed in the inner cavity for cooking.

The cooking appliance according to this embodiment is provided with a first inner tub 700 having a smaller volume for being placed in the first inner cavity 110 and a second inner tub 700 having a larger volume for being placed in the inner cavity. For example, when the partition 200 is placed in the inner cavity to divide the inner cavity into the first inner cavity 110 and the second inner cavity 120, the ingredient are placed in the first inner tub 700, and then the first inner tub 700 is placed in the first inner cavity 110, and the cooking method of the air fryer is implemented in the first inner cavity 110 by the first heating portion 310. The ingredient is placed in a container such as the bakeware 900 and then the container is placed in the second inner cavity 120, and thus the cooking method of the oven is implemented in the second inner cavity 120 by the movable heating portion 330 and the second heating portion 320. When the partition 200 is removed from the inner cavity and the entire inner cavity is used as the cooking cavity, the ingredient is placed in the second inner tub 700 and the second inner tub 700 is placed in the inner cavity, the cooking method of the air fryer is implemented in the inner cavity through the heating of the first heating portion 310.

As illustrated in FIG. 14, the inner tub 700 according to this embodiment has a bucket-shaped inner tub 700 body. A hidden inner tub handle 720 is disposed on a side wall 710 of the barrel-shaped inner tub 700 body. The hidden inner tub handle 720 is configured to facilitate placement of the inner tub 700 body into the inner cavity 110 or removal of the inner tub 700 body from the first inner cavity 110.

### Second Embodiment

A difference between the second embodiment and the first embodiment is that the cooking assembly in the second embodiment is provided with no door assembly 5000 as described in the first embodiment. In the second embodiment, a combination of the inner tub 700 assembly and the cover plate assembly to cover the opening is employed. In this embodiment, the difference between the second embodiment and the first embodiment will be illustrated, and an implementation in the first embodiment that may be used in the second embodiment will be omitted here.

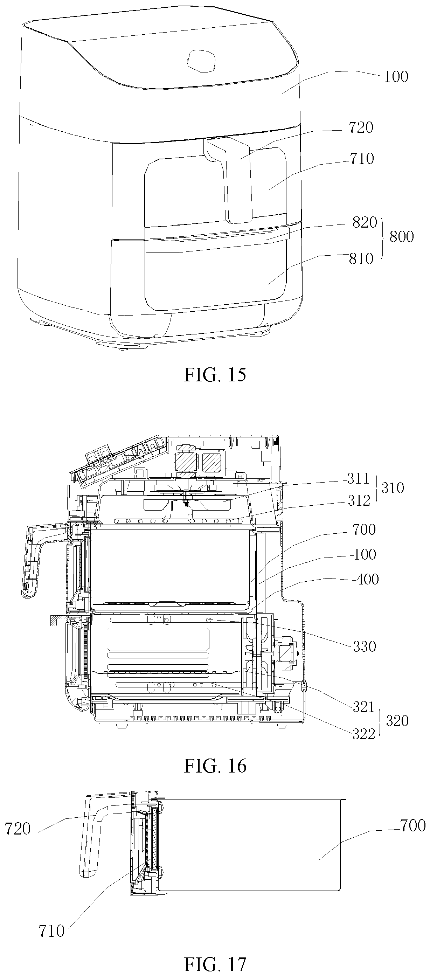

In an exemplary embodiment, as illustrated in FIG. 15, when the inner tub 700 is located in the inner cavity or the first inner cavity 110, the side wall 710 of the inner tub 700 covers the opening or a part of the opening corresponding to the first inner cavity 110. For example, when the inner tub 700 is a large-volume inner tub 700 for placement in the inner cavity, exemplarily, the side wall 710 of the inner tub 700 may cover the entire opening, or a lower part of the side wall 710 of the inner tub 700 may tapper towards the second inner cavity 120. That is, the side wall 710 of the inner tub 700 covers only the part of the opening corresponding to the first inner cavity 110. For another example, when the inner tub 700 is a small-volume inner tub 700 for placement in the first inner cavity 110, the side wall 710 of the inner tub 700 can only cover the part of the opening corresponding to the first inner cavity, or the entire opening can be covered by extending the side wall 710 of the inner tub 700 downwardly. In this embodiment, when the side wall 710 of the inner tub 700 covers the entire opening, the second inner cavity 120 covers the corresponding opening part by the inner tub 700. That is, the second opening can realize relative independence of the cooking cavity by means of the side wall 710 of the inner tub 700 for cooking the ingredients.

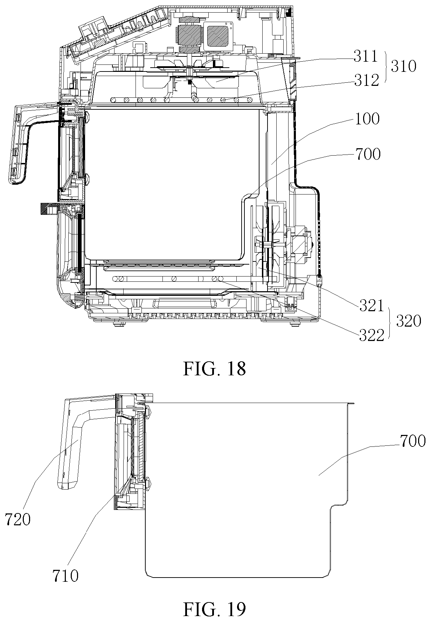

As illustrated in FIG. 17 and FIG. 19, the inner tub 700 according to this embodiment has the bucket-shaped inner tub 700 body. An inner tub handle 720 is disposed on the side wall 710 of the bucket-shaped inner tub 700 body. The inner tub handle 720 is configured to facilitate placement of the inner tub 700 body into the inner cavity 110 or removal of the inner tub 700 body form the first inner cavity 110.

In an exemplary embodiment, as illustrated in FIG. 16 and FIG. 18, when the side wall 710 of the inner tub 700 covers only the part of the opening corresponding to the first inner cavity 110, the cooking appliance further comprises a second cover assembly 800. The second cover assembly 800 is movably connected to the housing 100 to allow the cover assembly 800 to expose or cover a part of the opening corresponding to the second inner cavity 120. As illustrated in FIG. 16 and FIG. 17, in this embodiment, the inner tub 700 provided in the cooking appliance is the first inner tub 700 having a small volume for being placed in the first inner cavity 110 and the second inner tub 700 having a large volume for being placed in the inner cavity. In addition, the side walls 710 of the first inner tub 700 and the second inner tub 700 can only cover the part of the opening corresponding to the first inner cavity 110. In this case, the cooking appliance is equipped with the second cover assembly 800 to expose or cover the part of the opening corresponding to the second inner cavity 120, to form a relatively independent cooking cavity in the second inner cavity 120 for cooking the ingredient. In another exemplary embodiment, the second cover assembly 800 comprises a second cover body 810 and a cover handle 820 disposed on the cover body 810. As illustrated in FIG. 15, in this embodiment, a bottom edge of the second cover body 810 is movably connected to the housing 100 through being hinged to the housing 100. Further, the cover handle 820 is disposed at a fixed edge of the second cover body 810 to facilitate exposure or covering of the part of the opening corresponding to the second inner cavity by the cover handle 820.

In the present disclosure, unless expressly stipulated and defined otherwise, the first feature "on" or "under" the second feature may mean that the first feature is in direct contact with the second feature, or the first and second features are in indirect contact through another feature between the first and second features. In addition, the first feature "above" the second feature means that the first feature is directly above or obliquely above the second feature, or simply means that the level of the first feature is higher than that of the second feature. The first feature "below" the second feature may mean that the first feature is directly below or obliquely below the second feature, or simply mean that the level of the first feature is smaller than that of the second feature.

In the description of the present disclosure, it should be understood that, the orientation or the position indicated by terms such as "center," "longitudinal," "lateral," "length," "width," "thickness," "over," "below," "front," "rear," "left," "right," "vertical," "horizontal," "top," "bottom," "inner," "outer," "clockwise," and "anti-clockwise," should be construed to refer to the orientation or the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure.

It should be noted that all directional indications in the embodiments of the present disclosure are only used to explain relative positions between various components, movements of various components, or the like under a predetermined posture. When the predetermined posture changes, the directional indications also change accordingly.

In the present disclosure, unless otherwise clearly specified and limited, terms, such as "connect" "fix" or the like, should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those of ordinary skill in the art, the specific meaning of the above-mentioned terms in the present disclosure can be understood according to specific circumstances.

In addition, descriptions, such as "first" "second" or the like, in the present disclosure are only used for descriptive purposes, and cannot be understood as indicating or implying relative importance or implicitly indicating the number of indicated technical features. Therefore, the features associated with "first" and "second" may explicitly or implicitly comprise one or more of the features. In the description of the present disclosure, "plurality" means two or more, unless otherwise specifically defined.

In the present disclosure, the description with reference to the terms "one embodiment," "some embodiments," "an example," "a specific example," or "some examples," etc., means that specific features, structures, materials, or characteristics described in conjunction with the embodiment(s) or example(s) are comprised in at least one embodiment or example of the present disclosure. In the present disclosure, any illustrative reference of the above terms does not necessarily refer to the same embodiment(s) or example(s). Moreover, the specific features, structures, materials, or characteristics as described can be combined in any one or more embodiments or examples as appropriate. In addition, different embodiments or examples described in the specification may be combined by those skilled in the art.

In addition, combinations may be made on the technical solutions according to various embodiments of the present disclosure, and these combinations must be based on the fact that they can be realized by those of ordinary skill in the art. When a combination of the technical solutions is contradictory or unattainable, the combination of the technical solutions neither exists nor falls within the scope of the appended claims of the present disclosure.

Although embodiments of the present disclosure have been illustrated and described, it is conceivable for those of ordinary skill in the art that various changes, modifications, replacements, and variations can be made to these embodiments without departing from the principles and spirit of the present disclosure. The scope of the present disclosure shall be defined by the claims as appended and their equivalents.

## Claims

1. A cooking appliance, comprising:
a housing having an inner cavity and an opening in communication with the inner cavity; and
a partition removably disposed in the housing and located in the inner cavity, the inner cavity being divided into a first inner cavity and a second inner cavity by the partition.

2. The cooking appliance according to claim 1, wherein the cooking appliance comprises at least two partitions, one of the at least two partitions being removably connected to the housing and located in the inner cavity, and the inner cavity being divided into the first inner cavity and the second inner cavity by at least one of the at least two partitions,
wherein a bottom of each of the at least two partitions is at a different distance from a connection of the partition with the housing.

3. The cooking appliance according to claim 2, wherein the partition comprises a bucket-like body or a plate-like body.

4. The cooking appliance according to claim 2 or 3, further comprising a cover assembly connected to the partition and/or movably connected to the housing, the cover assembly being configured to cover the opening.

5. The cooking appliance according to claim 4, wherein the cover assembly comprises at least one first cover, one of the at least two partitions being removably disposed at the at least one first cover, and the at least one first cover being configured to partially or completely cover the opening.

6. The cooking appliance according to claim 5, wherein the number of the at least one first cover corresponds to the number of the partitions, each of the at least two partitions being separately disposed at the at least one first cover.

7. The cooking appliance according to claim 5 or 6, wherein when the at least one first cover is configured to partially cover the opening, the cover assembly further comprises a second cover configured to cover a part of the opening that is uncovered by the first cover.

8. The cooking appliance according to any one of claims 2 to 7, wherein the partition is thermally conductive.

9. The cooking appliance according to any one of claims 2 to 8, wherein the partition has a hollow structure, the hollow structure internally having a heat insulation portion.

10. The cooking appliance according to any one of claims 2 to 9, further comprising a heating assembly, the heating assembly comprising:
a first heating portion disposed in the housing or in the first inner cavity to heat the first inner cavity; and
a second heating portion disposed in the housing or in the second inner cavity to heat the second inner cavity.

11. The cooking appliance according to claim 10, wherein the heating assembly comprises a movable heating portion movably disposed in the first inner cavity and/or the second inner cavity.

12. The cooking appliance according to claim 11, wherein movement positions of the movable heating portion in the first inner cavity and/or the second inner cavity comprise at least a position where the movable heating portion is located proximate to the partition and a position where the movable heating portion is located proximate to an inner wall of the housing.

13. The cooking appliance according to any one of claims 3 to 12, wherein the inner wall of the housing is provided with a mounting fitting, the mounting fitting and the inner wall of the housing being integrally formed, and the mounting fitting being sealingly connected to the partition.

14. The cooking appliance according to claim 13, wherein:
an outer side wall (710) of the bucket-like body is provided with a flange, the flange extending towards an outer side of the bucket-like body; and
the mounting fitting comprises a groove for accommodating the flange or a rib for carrying the flange.

15. The cooking appliance according to claim 14, wherein the mounting fitting further comprises a catch block disposed above the rib, an edge of the opening being tightly pressed against the rib by the catch block.

16. The cooking appliance according to claim 14, wherein the rib has a sealing groove, a sealing gasket being disposed in the sealing groove.

17. The cooking appliance according to claim 14, wherein at least two grooves or at least two ribs are respectively provided and arranged at different positions on the inner wall.

18. The cooking appliance according to claim 13, wherein the mounting fitting is a protruding platform configured to be tightly attached to an outer side wall of the bucket-like body or a bottom wall of the bucket-like body.

19. The cooking appliance according to claim 1, further comprising a heating assembly, the heating assembly at least comprising a movable heating portion movably disposed in the first inner cavity and/or in the second inner cavity.

20. The cooking appliance according to claim 19, further comprising:
a door assembly disposed at the housing to expose or cover both openings corresponding to the first inner cavity and the second inner cavity.

21. The cooking appliance according to claim 20, wherein a sealing strip is disposed between the door assembly and the partition to completely isolate the first inner cavity from the second inner cavity.

22. The cooking appliance according to claim 21, wherein the sealing strip is disposed at the door assembly and/or at the partition.

23. The cooking appliance according to any one of claims 20 to 22, wherein the door assembly comprises:
a door frame having a side hinged to the housing;
a viewable door body fixedly disposed at the door frame;
a door handle disposed at another side of the door frame opposite to the side of the door frame hinged to the housing; and
a locking structure disposed at the other side of the door frame opposite to the side of the door frame hinged to the housing.

24. The cooking appliance according to claim 23, wherein the partition is thermally conductive.

25. The cooking appliance according to any one of claims 19 to 24, wherein the heating assembly further comprises:
a first heating portion disposed in the housing or the first inner cavity to heat the first inner cavity; and
a second heating portion disposed in the housing or the second inner cavity to heat the second inner cavity.

26. The cooking appliance according to claim 25, wherein the partition has a hollow structure, the hollow structure internally having a heat insulation portion.

27. The cooking appliance according to claim 25 or 26, wherein movement positions of the movable heating portion in the first inner cavity and/or the second inner cavity comprise at least a position where the movable heating portion is located proximate to the partition and a position where the movable heating portion is located proximate to an inner wall of the housing.

28. The cooking appliance according to any one of claims 19 to 27, wherein the housing is provided with a mounting fitting on an inner wall of the housing, the mounting fitting and the inner wall of the housing being integrally formed, and the mounting fitting being sealingly connected to the partition.

29. The cooking appliance according to claim 28, wherein:
the mounting fitting is a groove when the inner cavity is vertically divided by the partition into the first inner cavity and the second inner cavity that are arranged in parallel; or
the mounting fitting is a groove or a rib when the inner cavity is horizontally divided by the partition into the first inner cavity and the second inner cavity that are stacked together.

30. The cooking appliance according to claim 28 or 29, wherein at least two mounting fittings are provided in a vertical direction or in a horizontal direction.

31. The cooking appliance according to any one of claims 19 to 30, further comprising at least one inner tub, each of the at least one inner tub being removably disposed in the inner cavity, in the first inner cavity, or in the second inner cavity,
when the inner tub is located in the inner cavity, in the first inner cavity, or in the second inner cavity, a side wall of the inner tub covers the opening or a part of the opening corresponding to the first inner cavity or a part of the opening corresponding to the second inner cavity.

32. The cooking appliance according to claim 31, further comprising a cover assembly when the side wall of the inner tub covers only the part of the opening corresponding to the first inner cavity, the cover assembly being movably connected to the housing to allow the cover assembly to expose or cover the part of the opening corresponding to the second inner cavity.
